**Europäisches Patentamt**

(19) **European Patent Office**

**Office européen des brevets**

(11) Numéro de publication: **0 072 334 B1**

(12) ## FASCICULE DE BREVET EUROPEEN

(45) Date de publication du fascicule du brevet:
**31.07.85**

(51) Int. Cl.⁴: **B 60 P 3/04,** A 01 K 63/00

(21) Numéro de dépôt: **82401526.7**

(22) Date de dépôt: **12.08.82**

(54) **Procédé et Installation pour la conservation en vie d'animaux aquatiques tels que des crustacés pendant leur transport.**

(30) Priorité: **12.08.81 FR 8115598**

(43) Date de publication de la demande:
**16.02.83 Bulletin 83/7**

(45) Mention de la délivrance du brevet:
**31.07.85 Bulletin 85/31**

(84) Etats contractants désignés:
**AT BE CH DE GB IT LI LU NL SE**

(56) Documents cités:
**DE - C - 160 966
FR - A - 419 739
US - A - 2 751 882
US - A - 3 687 111**

(73) Titulaire: **Martin, Alain, La Croix Neuve,
F-29228 Plougasnou (FR)**

(72) Inventeur: **Martin, Alain, La Croix Neuve,
F-29228 Plougasnou (FR)**

(74) Mandataire: **Bruder, Michel, Cabinet Michel
Bruder 10, rue de la Pépinière, F-75008 Paris (FR)**

BUNDESDRUCKEREI BERLIN

## Description

La présente invention concerne un procédé et une installation pour la conservation en vie d'animaux aquatiques, tels que des crustacés, pendant leur transport.

Jusqu'à présent, pour le transport de crustacés tels que crabes et araignées de mer vivants sur de longues distances, on a utilisé des camions et des bateaux formant viviers tel ceux décrits dans le US-A-3 687 111 et le DE-C-160 966. Pour le transport terrestre, on place environ de dix à douze tonnes d'eau de mer dans des viviers, consitués par des grands bacs, qui se trouvent à l'intérieur d'une semi-remorque frigorifique et qui sont aérés en permanence par des souffleries pour oxygéner l'eau, ou bien encore à l'aide de bouteilles d'oxygène.

Or, un tel procédé de conservation des crustacés pendant leur transport présente de nombreux et sérieux inconvénients. En premier lieu, la charge utile du véhicule est assez restreinte du fait de la quantité importante d'eau qu'il est nécessaire de transporter en même temps que les crustacés, pour assurer la survie de ceux-ci. Les viviers ainsi utilisés sont surchargés par rapport à ceux qui servent au stockage à terre et la moindre panne du système d'aération de l'eau (souffleries ou bouteilles d'oxygène) devient fatale à tout ou partie du chargement si cette panne dépasse quelques minutes, car les crustacés s'asphyxient très vite.

Par ailleurs, les véhicules affectés au transport de crustacés ne peuvent guère servir pour rapporter un frêt de retour, du fait de l'encombrement des viviers qui s'y trouvent en permanence.

Ainsi, le poids d'eau élevé, les risques de mortalité des crustacés et la non-polyvalence des moyens de transport font que ce procédé est relativement onéreux.

La présente invention vise à remédier à ces inconvénients en procurant un procédé et une installation de conception particulièrement simple et permettant d'assurer le transport d'animaux aquatiques relativement fragiles, tels que des crustacés, dans les meilleures conditions de survie.

A cet effet ce procédé pour la conservation en vie d'animaux aquatiques, tels que des crustacés, pendant leur transport, dans lequel on place et maintient les animaux dans un espace étanche, est caractérisé en ce qu'on maintient en permanence, dans cet espace étanche, une atmosphère humide, à une température allant de +5°C à +13°C, obtenue par pulvérisation d'eau à la partie supérieure de l'espace dans lequel son logés les animaux aquatiques, l'eau condensée étant immédiatement récupérée, après sa condensation, à la partie inférieure de l'espace pour la recycler à la partie supérieure après l'avoir réfrigérée et pour éviter ainsi toute formation d'une couche d'eau permanente dans l'espace étanche.

L'invention a également pour objet une installation pour la conservation en vie d'animaux aquatiques, tels que des crustacés, pendant leur transport dans un véhicule, comportant, à l'intérieur de véhicule, au moins un espace étanche dans lequel sont logés les animaux aquatiques, chaque espace étanche étant délimité par des cloisons transversales des pulvérisateurs d'eau placés à la partie supérieure de cet espace étanche et des moyens pour collecter l'eau condensée à la partie inférieure de l'espace et pour la recycler jusqu'aux pulvérisateurs, caractérisée en ce qu'elle comporte des moyens pour réfrigérer les espaces étaches, des panneaux longitudinaux horizontaux constituant le plafond de cet espace et des panneaux formant le plancher de l'espace, ces derniers panneaux étant inclinés et convergeant vers un trou pour la récupération de l'eau condensée et en ce que les cloisons transversales des espaces de chargement, les panneaux constituant les plafonds de ces espaces et les panneaux constituant les planchers de ces espaces sont montés d'une manière amovible sur la caisse du véhicule de manière à pouvoir être démontés et rangés à l'avant de la caisse.

Le procédé et l'installation suivant l'invention offrent l'avantage que l'atmosphère humide à basse température qui est créée dans l'espace où se trouvent les animaux aquatiques, permet à ceux-ci de survivre du fait qu'ils filtrent l'eau pour en tirer l'oxygène et qu'ainsi l'eau mélangée à l'air offre les mêmes conditions de survie que l'air mélangé à l'eau. Comme la quantité d'eau mise en suspension dans l'air sous forme de brouillard épais est relativement faible, il n'est pas nécessaire de transporter une quantité importante d'eau pour le maintien en vie des animaux aquatiques. Il suffit en effet de prévoir une réserve suffisante pour que le circuit d'alimentation de l'atmosphère humide puisse fonctionner normalement. Ainsi on peut utiliser seulement une ou deux tonnes d'eau dans une semiremorque réfrigérée, au lieu de dix ou douze tonnes avec la technique actuelle.

En outre, en cas de panne du circuit assurant la formation de l'atmosphère humide, les animaux qui ne se trouvent pas baigner dans l'eau, ne risquent pas de s'asphyxier par manque d'oxygène et on a donc suffisamment de temps pour réparer la panne, sans faire courir trop de risque au chargement du véhicule.

L'invention permet également d'assurer la polyvalence des véhicules affectés à ce type de transport par route. En effet, il suffit de prévoir des aménagements intérieurs des carrosseries permettant de démonter très facilement les éléments de l'installation et de les ranger d'une façon très peu encombrante si bien que le véhicule peut être utilisé pour charger au sol divers frêts de retour. Le coût global du transport des animaux aquatiques sera donc moins élevé qu'avec les camions réfrigérés actuellement utilisés du fait de l'augmentation du poids de la marchandise transportée dans un même véhicule, sans augmenter les frais de fonctionnement, et de la possibilité du retour en charge.

Un autre avantage offert par le procédé suivant l'invention est que, pendant le transport, les crustacés, reposent les uns sur les autres, sur le fond des divers compartiments, et ils sont donc ainsi maintenus latéralement par suite de leur contact les uns avec les autres. Au contraire lorsque les crustacés sont transportés dans une cuve d'eau de mer, ils flottent plus ou moins, sous l'effet des cahots de la route, et ils s'entrechoquent alors ce qui entraîne souvant l'arrachage de leurs pattes et l'obtention, à l'arrivée, de crustacés de mauvaise qualité.

D'une manière pous générale, le procédé et l'installation suivant l'invention permettent de commercialiser dans de meilleures conditions certains animaux aquatiques du fait de leur survie dès les lieux de pêche jusqu'aux points de vente aussi éloignés soient-ils. En outre, du fait que les espèces à vendre seront livrées vivantes, il sera possible de choisir le meilleur jour pour la vente, ce qui est un avantage du point de vue commercial. Le procédé et l'installation suivant l'invention peuvent être mis en oeuvre sur n'importe quels véhicules destinés au transport d'animaux auqatiques notamment sur des camions et remorques réfrigérés, sur des wagons, des bateaux de pêche. Dans ce dernier cas, ils permettent d'améloirer les conditions de survie des crustacés tels que crabes et araignées qui souffrent beaucoup lorsque le bateau traverse des courants chauds. Il est également possible de rapporter des langoustines vivantes de la mer du Nord par exemple, alors que ces dernières arrivent à terre mortes et glacées dans de mauvaises conditions.

On décrira ci-après, à titre d'exemple non limitatif, une forme d'exécution de la présente invention en référence au dessin annexé sur lequel:

La figure 1 est une vue en coupe verticale et longitudinale d'une semi-remorque pourvue d'une installation de conservation en vie d'animaux aquatiques suivant l'invention.

La figure 2 est un schéma détaillé du dispositif de récupération de l'eau condensée et de pompage de cette eau.

La figure 3 est une vue en coupe verticale et transversale de la semi-remorqpe pourvue de l'équipement interne faisant partie de l'installation de conservation.

La figure 4 est une vue en plan partielle des panneaux posés sur la plate-forme de la semi-remorque.

La figure 5 est une vue en coupe transversale de la semi-remorque après démontage de l'équipement interne faisant partie de l'installation de conservation.

La figure 6 est une vue en plan de la plate-forme de la semi-remorque libérée de l'équipement interne faisant partie de l'installation de conservation.

La figure 7 est une vue en coupe verticale et longitudinale de la semi-remorque après démontage de l'équipement interne faisant partie de l'installation de conservation, avec possibilité de chargement au sol pour le retour.

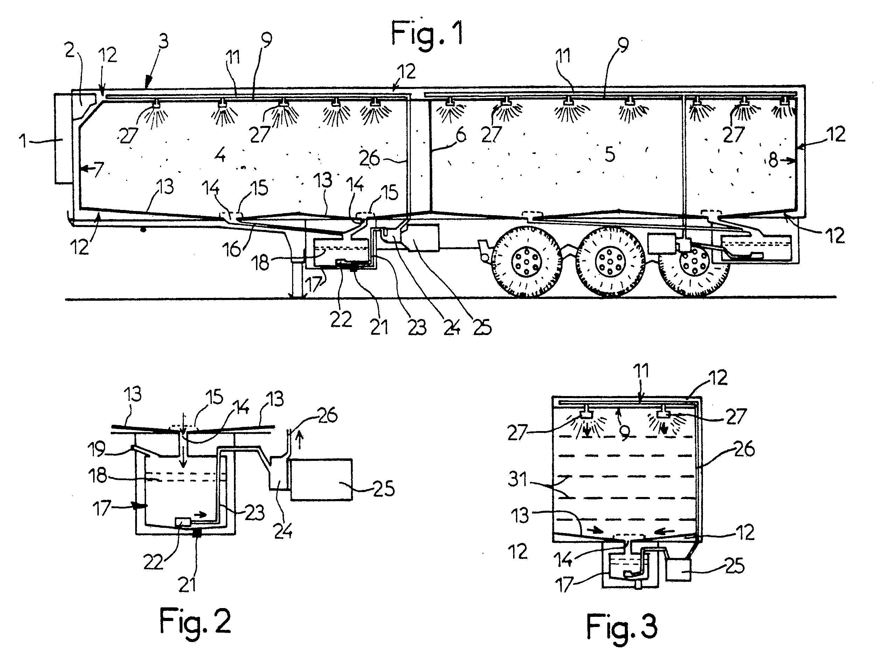

La semi-remorque réfrigérée représentée sur la figure 1, qui est équipée de l'installation de conservation suivant l'invention, comporte de la manière habituelle, à l'avant, un groupe frigorifique 1 pourvu d'un évaporateur 2 situé à l'intérieur de la caisse 3 de la semi-remorque. A l'intérieur de cette caisse 3 sont délimités deux espaces de chargement 4 et 5 séparés entre eux par une cloison transversale médiane 6. Ces deux espaces de chargement séparés 4 et 5 sont prévus à cause de la grande longueur des semi-remorques, pour permettre de récupérer assez vite l'eau utilisée dans l'installation, mais cette disposition n'est toutefois pas limitative: on pourrait en effet concevoir des semi-remorques équipées d'un seul espace de chargement étanche ou au contraire de plus de deux espaces. L'espace antérieur 4 est délimité par une cloison transversale antérieure 7 et la cloison transversale médiane 6, tandis que l'espace postérieur 5 est délimité par cette cloison transversale médiane 6 et une cloison transversale postérieure 8 située près de la porte placée à l'arrière de la semi-remorque. Les deux espaces de chargement 4 et 5 sont également fermés, à leurs parties supérieures, par des panneaux longitudinaux horizontaux 9, constituant des plafonds des espaces 4 et 5 et qui sont situés à une certaine distance en dessous du plafond de la caisse 3. Entre les panneaux 9 constituant les plafonds des espaces de chargement 4 et 5 et le plafond de la caisse 3 est ainsi délimité un espace s'étendant sur toute la longueur de la semi-remorque et dans lequel sont logées des tuyauteries 11 fixées au plafond et parcourues par l'eau pulvérisée dans les espaces de chargement 4 et 5 comme on le verra plus loin.

Le groupe 1 est pourvu d'un ventilateur pour faire circuler l'air réfrigéré autour du chargement contenu dans les espaces 4 et 5. Pour permettre cette circulation, la cloison transversale antérieure 7 délimitant l'espace de chargement antérieur 4 est fixée de façon définitive uniquement aux parois latérales et verticales de la caisse 3 de manière à permettre une libre circulation de l'air en dessous d'elle et en dessous du chargement. Les deux espaces étanches de chargement 4 et 5 délimitent ainsi, à l'intérieur de la caisse 3, des passages 12 permettant la circulation de l'air froid brassé par le ventilateur du groupe frigorifique 1.

A leurs parties inférieures, les espaces de chargement étanches 4 et 5 sont fermés par des planchers constitués par des ensembles de panneaux triangulaires 13, démontables, assemblés quatre par quatre de manière à former des sortes de pyramides à sommet tourné vers le bas. Ces panneaux sont étanches entre eux ainsi qu'à leur jonction avec les parois de la caisse 3 et les cloisons transversales 6, 7, 8, ils sont renforcés par en dessous mais ils laissent l'air froid circuler également sous tout le chargement. Ces panneaux sont inclinés de manière à converger vers un trou central 14 prévu dans la plate-forme de la semi-remorque servant à récupérer l'eau coulant sur les panneaux triangulaires. Chaque trou 14 est surmonté d'un préfiltre 15 assurant la protection du trou 14. A chaque trou 14 se raccorde, en dessous des panneaux 13 et de la plate-forme de la semi-remorque, un conduit isotherme 16 qui amène l'eau de récupération à une cuve isotherme 17 servant de réserve. Cette cuve 17 est avantageusement démontable pour permettre son nettoyage. Une cuve 17 est associée à chacun des espaces de chargement étanches 4 et 5. Dans chaque cuve 17 est logé un filtre amovible 18 permettant de le démonter aisément en vue de son nettoyage. Des orifices de remplissage 19 et de vidange 21 sont prévus respectivement à la partie supérieure et à la partie inférieure de la cuve 17. Dans chacune des cuves 17 est logée une crépine de pompage 22 raccordée par un conduit 23 à une pompe 24 entraînée en rotation par un moteur 25 (moteur électrique ou diesel). A la sortie de chaque pompe 24 est branché un tuyau vertical démontable 26 qui se raccorde, à son extrémité supérieure, à la tuyauterie 11 fixée au plafond de 1 caisse 3. Sur cette tuyauterie 11 sont fixés, à des intervalles appropriés, des pulvérisateurs 27 traversant les panneaux 9 constituant les plafonds des espaces de chargement 4 et 5.

Le fonctionnement de l'installation qui vient d'être décrite est le suivant:

Les cuves 17 servant à l'humidification des espaces de chargement 4 et 5 sont tout d'abord remplies d'eau, douce ou salée suivant la nature des animaux aquatiques devant être transportés. Ce remplissage s'effectue à travers les orifices 19. Ensuite, le groupe frigorifique 1 et les divers moteurs 25 d'entraînement des pompes 24 étant mis en marche, l'eau se trouvant dans une cuve 17 est aspirée par la crépine 14 et le conduit 23 jusqu'à la pompe 24, pour être refoulée par le conduit vertical 26 dans la tuyauterie 11 s'étendant horizontalement à la partie supérieure de la caisse, au-dessus des espaces de chargement 4 et 5. Cette eau passe ensuite dans les pulvérisateurs 27 qui traversent les plafonds 9 des espaces de chargement 4 et 5 lesquels contiennent, jusqu'à une certaine hauteur, des animaux aquatiques, tels que des crustacés, qui doivent être transportés. Les pulvérisateurs 27 créent ainsi, dans la partie supérieure de chaque espace de chargement 4 et 5, un brouillard épais d'eau douce ou salée, ce qui assure le mouillage intense de l'atmosphère dans laquelle se trouvent les animaux aquatiques. Les fines gouttelettes d'eau projetées par les pulvérisateurs 17 arrivent finalement au bas de chacun des espaces étanches 4 et 5 et elles sont collectées et guidées par les panneaux triangulaires 13 en pente vers le trou central 14 en passant à travers le préfiltre 15, après quoi le tuyau isotherme 16 ramène l'eau à la cuve 17, à travers le filtre interne 18, et le cycle recommence.

Pour maintenir en permanence la température de +5°C à +13°C, le groupe frigorifique 1 brasse l'air en le refraîchissant et le fait circuler dans les espaces 12 tout autour du chargement, permettant ainsi d'obtenir une fraîcheur bien répartie. L'eau pulvérisée prend la température désirée en passant dans la tuyauterie supérieure 11 et également dans l'atmosphère humide.

L'ensemble constitué par les cloisons transversales 6, 7, 8, les panneaux 13 constituant le plancher des espaces de chargement 4 et 5 et les plafonds 9 est étanche pour que toute l'eau soit bien récupérée dans le circuit.

A l'arrière de la semi-remorque, la paroi transversale 8 doit être assez solide pour maintenir le chargement jusqu'à une certaine hauteur.

Comme on l'a vu précédemment, la cloison transversale 6 prévue à l'avant n'est solidaire de façon définitive que des parois latérales afin de laisser l'air circuler sous l'évaporateur 2, en passant par dessous le chargement, même lorsque tout le matériel est rangé contre elle.

Les parois latérales de la caisse 3 sont pourvues, tout autour de la semi-remorque, de rainures permettant de maintenir de manière étanche et amovible les divers panneaux 6, 7, 8, 9 et 13 délimitant les espaces de chargement 5.

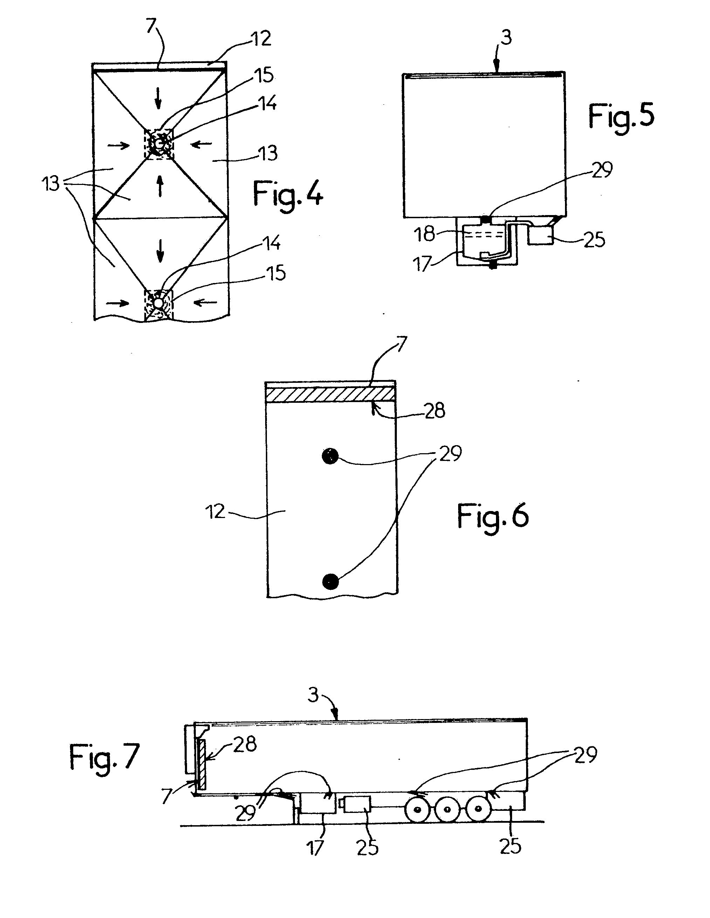

Les figures 5, 6, et 7 illustrent la semi-remorque lorsque l'équipement interne prévu dans la caisse 3 pour la conservation des animaux aquatiques est rangé de manière à permettre de transporter d'autres matériaux. Tous les éléments démontables de l'installation, tels que les cloisons transversales 6, 8, les panneaux triangulaires 13 formant les planchers et les plafonds longitudinaux 9, sont rangés à l'avant de la semi-remorque, contre la cloison transversale antérieure 7 qui, elle, est fixe en permanence. De même le tuyaux verticaux 26 et horizontaux 11 sont démontés et rangés à l'avant dans l'espace indiqué par 28 sur la figure 7. Tous les éléments ainsi démontés sont rangés en étant sur-élevés par rapport à la plate-forme 12 de la semi-remorque afin de laisser l'air froid circular librement dans le cas de transports frigorifiques au retour. Les pulvérisateurs 27 et autres accessoires de petite dimension peuvent être rangés dans un coffre situé sous la semi-remorque. Par ailleurs, les tros de récupération de l'eau 14 prévus dans la plate-forme de la semi-remorque sont obturés par des bouchons 29 comme on peut le voir sur les figures 5 et 6.

On peut prévoir accesoirement, dans les espaces de chargement 4 et 5, des étagères amovibles ajourées 31 (figure 3) pour les espèces qui ne supportent pas le tassement, telles que par exemple les langoustines.

## Revendications

1. Procédé pour la conservation en vie d'animaux aquatiques, tels que des crustacés, pendant leur transport, dans lequel on place et maintient les animaux dans un espace étanche, caractérisé en ce qu'on maintient en permanence, dans cet espace étanche, une atmosphère humide, à une température allant de +5°C à +13°C, obtenue par pulvérisation d'eau à la partie supérieure de l'espace dans lequel sont logés les animaux aquatiques, l'eau condensée étant immédiatement récupérée, après sa condensation, à la partie inférieure de l'espace pour la recycler à la partie supérieure après l'avoir réfrigérée et pour éviter ainsi toute formation d'une couche d'eau permanente dans l'espace étanche.

2. Installation pour la conservation en vie d'animaux aquatiques, tels que des crustacés, pendant leur transport dans un véhicule, comportant, à l'intérieur du véhicule, au moins un espace étanche (4, 5) dans lequel sont logés les animaux aquatiques, chaque espace étanche (4, 5) étant délimité par des cloisons transversales (6, 7, 8), des pulvérisateurs d'eau (27) placés à la partie supérieure de cet espace étanche (4, 5) et des moyens (8, 16, 17) pour collecter l'eau condensée à la partie inférieure de l'espace et pour la recycler jusqu'aux pulvérisateurs (27), caractérisée en ce qu'elle comporte des moyens (1, 2) pour réfrigérer les espaces étanches, des panneaux longitudinaux horizontaux (9) constituant le plafond de cet espace et des panneaux (13) formant le plancher de l'espace, ces derniers panneaux étant inclinés et convergeant vers un trou (14) pour la récupération de l'eau condensée et en ce que les cloisons transversales (6, 7, 8) des espaces de chargement (4, 5), les panneaux (9) constituant les plafonds de ces espaces et les panneaux (13) constituant les planchers de ces espaces sont montés d'une manière amovible sur la caisse (3) du véhicule de manière à pouvoir être démontés et rangés à l'avant de la caisse.

3. Installation suivant la revendication 2, caractérisée en ce que le plancher de chaque, espace étanche (4, 5) est formé de panneaux triangulaires (13), démontables, assemblés quatre par quatre de manière à former une pyramide à sommet tourné vers le bas, le trou (14) de récupération de l'eau se trouvant au sommet de cette pyramide.

4. Installation suivant la revendication 3, caractérisée en ce que chaque trou (14) de récupération de l'eau condensée est relié, par un conduit isotherme (16), à une cuve isotherme (17) pourvue d'orifices de remplissage (19) et de vidange (21), en ce que dans cette cuve (17) est logée une crépine de pompage (22) raccordée par un conduit (23) à une pompe (24) entraînée en rotation par un moteur (25), et en ce que la sortie de la pompe (24) est reliée à un tuyau (26) qui se raccorde à son extrémité supérieure, à une tuyauterie (11) fixée au plafond de la caisse (3) du véhicule et sur laquelle sont fixés les pulvérisateurs (27) traversant les panneaux (9) constituant les plafonds des espaces de chargement (4 et 5).

5. Installation suivant l'une quelconque des revendications 2 à 4, appliquée à une semi-remorque ou à un camion réfrigéré comportant à l'avant un groupe frigorifique (1) pourvu d'un évaporateur (2) situé à l'intérieur de la caisse (3) du véhicule, caractérisée en ce que le groupe frigorifique comprend un ventilateur pour le brassage d'air froid à l'intérieur de la caisse (3) du véhicule et le plafond (9) de chaque espace de chargement (4, 5) et son plancher (13) sont respectivement espacés du plafond de la caisse (3) et de la plate-forme du véhicule pour délimiter des passages (12) permettant la circulation de l'air froid brassé par le ventilateur.

6. Installation suivant la revendication 5, caractérisée en ce que la cloison transversale antérieure (7) délimitant l'espace de chargement antérieur (4) est fixée de façon définitive uniquement aux parois latérales et verticales de la caisse (3) de manière à permettre une libre circulation de l'air en dessous d'elle et en dessous du chargement.

7. Installation suivant l'une quelconque des revendications 2 à 6, caractérisée en ce que les tuyaux verticaux (26) et horizontaux (11) alimentant les pulvérisateurs (27) sont amovibles.

8. Installation suivant l'une quelconque des revendications 2 à 7, caractérisée en ce que des bouchons (29) sont prévus pour obturer les trous (14) de récupération de l'eau condensée dans la plate-forme du véhicule.

9. Installation suivant l'une quelconque des revendications 2 à 8, caractérisée en ce qu'elle comporte des étagères amovibles ajourées (31) dans les espaces de chargement (4, 5).

**Patentansprüche**

1. Verfahren um Wassertiere, wie z. B. Krustazeen, während ihres Transports am Leben zu erhalten, bei welchem die Tiere in einen abgedichteten Raum verbracht und in ihm gehalten werden, dadurch gekennzeichnet, daß man in diesem Raum dauernd ein feuchte Atmosphäre bei einer Temperatur aufrechterhält, die sich zwischen +5°C und +13°C bewegt, die dadurch erreicht wird, daß man im oberren Bereich des Raumes, in welchem die Wassertiere untergebracht sind, Kondenswasser zerstäubt, das unmittelbar nach seiner Kondensation im unteren Bereich des Raumes wiedergewonnen wird, um es nach Abkühlung im oberen Bereich wieder in den Kreislauf einzuführen, und um somit jede Bildung einer ständigen Wasserschicht im abgedichteten Raum zu verhindern.

2. Einrichtung zur Lebenderhaltung von Wassertieren, wie z. B. Krustazeen, während ihres Transports in einem Fahrzeug, welche im Inneren des Fahrzeuges wenigstens einen abgedichteten Raum (4, 5) umfaßt, in welchem die Wassertiere untergebracht werden, wobei jeder abgedichtete Raum (4, 5) von Querwänden (6, 7, 8) begrenzt wird, Wasserzerstäuber (27) im oberen Bereich dieses abgedichteten Raumes (4, 5) angeordnet sind und Mittel (8, 16, 17) zum Sammeln des Kondenswassers im unteren Bereich des Raumes und zu dessen Rückführung zu den Zerstäubern (27), dadurch gekennzeichnet, daß sie Mittel (1, 2) zur Kühlung der abgedichteten Räume, die Decke dieses abgedichteten Raumes (4, 5) bildende, horizontale Längsplatten (9) und den Boden des Raumes bildende Platten (13) aufweist, wobei letztere Platten gegen ein zur Wiedergewinnung des Kondenswassers dienendes Loch (14) geneigt sind und gegen es konvergieren, und daß die Querwände (6, 7, 8) der Laderäume (4, 5) die die Decke dieser Räume bildenden Platten (9) und die die Böden dieser Räume bildenden Platten (13) derart lösbar an der Karosserie des Fahrzeugs angebracht sind, daß sie abgenommen werden können.

3. Einrichtung nach Anspruch 2, dadurch gekennzeichnet, daß der Boden eines jeden abgedichteten Raumes (4, 5) von demontierbaren, dreieckigen Platten (13) gebildet wird, die in Form einer Pyramide mit nach unten weisender Spitze als deren vier Seitenflächen angeordnet sind, wobei sich das Loch (14) zur Wiedergewinnung des Wassers an der Spitze dieser Pyramide befindet.

4. Einrichtung nach Anspruch 3, dadurch gekennzeichnet, daß jedes Loch (14) zur Wiedergewinnung des Kondenswassers über eine thermisch isolierte Leitung (16) mit einer thermisch isolierten Wanne (17) verbunden ist, die mit Füllöffnungen (19) und Ablauföffnungen (21) versehen ist, daß in dieser Wanne (17) ein Pumpensaugkopf (22) angeordnet ist, der über eine Leitung (23) mit einer durch einen Motor (25) in Rotation versetzbaren Pumpe (24) verbunden ist, und daß der Ausgang der Pumpe (24) mit einem Rohr (16) verbunden ist, das mit seinem oberen Ende an ein an der Decke der Karosserie (3) befestigtes Rohrsystem (11) angeschlossen ist, an dem die Zerstäuber (27) befestigt sind, welche die die Decke der Laderäume (4, 5) bildenden Platten (9) durchqueren.

5. Einrichtung nach einem der Ansprüche 2 bis 4, angebracht an einem Sattelanhänger oder an einem Kühllastwagen, der in seinem vorderen Bereich eine Kühlgruppe (1) umfaßt, die mit einem im Inneren der Karosserie (3) angeordneten Verdampfer (2) versehen ist, dadurch gekennzeichnet, daß die Kühlgruppe einen Ventilator für das Einblasen der kalten Luft in das Innere der Fahrzeugkarosserie (3) umfaßt, und daß die Decke (9) jedes Laderaumes (4, 5) und sein Boden (13) jeweils gegenüber der Decke der Karosserie (3) bzw. der Fahrzeugplattform abgedichtet sind, um Kanäle (12) zu bilden, die die Zirkulation der vom Ventilator eingeblasenen Kaltluft gestatten.

6. Einrichtung nach Anspruch 5, dadurch gekennzeichnet, daß die den vorderen Laderaum (4) begrenzende, vordere Querwand (7) nur mit den vertikalen Seitenwänden der Karosserie (3) fest verbunden ist, derart, daß eine freie Luftzirkulation unter ihr und unter der Ladung möglich ist.

7. Einrichtung nach einem der Ansprüche 2 bis 6, dadurch gekennzeichnet, daß die die Zerstäuber (27) speisenden, vertikalen (26) und horizontalen (11) Rohre abnehmbar sind.

8. Einrichtung nach einem der Ansprüche 2 bis 7, dadurch gekennzeichnet, daß Stopfen (29) zum Verschließen der in der Fahrzeugplattform befindlichen Löcher (14) zur Wiedergewinnung des Kondenswassers vorgesehen sind.

9. Einrichtung nach einem der Ansprüche 2 bis 8, dadurch gekennzeichnet, daß sie abnehmbare, durchbrochene Regalelemente (31) in den Laderäumen (4, 5) umfaßt.

## Claims

1. Process for keeping alive aquatic animals, such as crustaceans, during transport thereof, in which the animals are placed and maintained in a water-tight space, characterized in that a humide atmosphere ist permanently maintained in this water-tight space at a temperature ranging from $+5°C$ to $+13°C$, obtained by atomization of water in the upper part of the space in which the aquatic animals are housed, the condensed water being immediately recovered, after condensation thereof, in the lower part of the space in order to recycle it to the upper part after having cooled it and in order thus to avoid any formation of a permanent sheet of water in the water-tight space.

2. Installation for keeping alive aquatic animals, such as crustaceans, during transport thereof in a vehicle, comprising, inside the vehicle, at least one water-tight space (4, 5) in which the aquatic animals are housed, each water-tight space (4, 5) being defined by transverse partitions (6, 7, 8), water atomizers (27) placed in the upper part of this water-tight space (4, 5) and means (8, 16, 17) for collecting the condensed water in the lower part of the space and for recycling up to the atomizers (27), characterized in that it comprises means (1, 2) for cooling the water-tight spaces, horizontal longitudinal panels (9) constituting the ceiling of this space and panels (13) forming the floor of the space, these latter panels being inclined and converging towards a hole (14) for recovering the condensed water, and in that the transverse partitions (6, 7, 8) of the loading spaces (4, 5), the panels (9) constituting the ceilings of these spaces and the panels (13) constituting the floors of these spaces are mounted in removable manner on the body (3) of the vehicle so as to be able to be dismanteled and arranged at the front of the body.

3. Installation according to Claim 2, characterized in that the floor of each water-tight space (4, 5) is formed of dismountable triangular panels (13) assembled in four's so as to form a pyramid with downwardly turned apex, the hole (14) for recovering the water being located at the apex of this pyramid.

4. Installation according to Claim 3, characterized in that each hole (14) for recovering the condensed water is connected, by an isothermic conduit (16), to an isothermic tank (17) provided with filling (19) an emptying orifices (21), in that, in this tank (17), there is housed a pump strainer (22) connected by a conduit (23) to a pump (24) driven in rotation by a motor (25), an in that the oulet of the pump (24) is connected to a pipe (26) which is connected at is upper end to a pipework (11) fixed to the ceiling of the box (3) of the vehicle and on which are fixed the atomizers (27) passing through the panels (9) constituting the ceilings of the loading spaces (4 and 5).

5. Installation according to any one of Claims 2 to 4 applied to a semi-trailer or to a refrigerated lorry comprising at the front a refrigerating unit (1) provided with an evaporator (2) located inside the box (3) of the vehicle, characterized in that the refrigerating unit comprises a ventilator for mixing cold air inside the box (3) of the vehicle and the ceiling (9) of each loading space (4, 5) and its floor (13) are respectively spaced from the ceiling of the box (3) and from the platform of the vehicle to define passages (12) allowing the circulation of the cold air mixed by the ventilator.

6. Installation according to Claim 5, characterized in that the front transverse partition (7) defining the front loading space (4) is fixed in definitive manner solely to the lateral and vertical walls of the box (3) so as to allow free circulation of the air below it and below the load.

7. Installation according to any one of Claims 2 to 5, characterized in that the vertical (26) and horizontal (11) pipes supplying the atomizers (27) are removable.

8. Installation according to any one of Claims 2 to 7, characterized in that stoppers (29) are provided for obturating the holes (14) for recovering the condensed water in the platform of the vehicle.

9. Installation according to any one of Claims 2 to 8, characterized in that it comprises removable perforated shelves (31) in the loading spaces (4, 5).

## Fig. 1

## Fig. 2

## Fig. 3

Fig.4

Fig.5

Fig.6

Fig.7